# EUROPÄISCHE PATENTSCHRIFT

(11) **EP 2 089 446 B1**
(45) Veröffentlichungstag und Bekanntmachung des Hinweises auf die Patenterteilung: **11.07.2012**
(21) Anmeldenummer: 07820288.4
(22) Anmeldetag: 18.09.2007
(51) Int. Cl.: C08G 18/10, C08G 18/72, C09J 175/04, C08G 18/48, C08G 18/75

(54) **ISOCYANATPREPOLYMER MIT UNTERSCHIEDLICH REAKTIVEN NCO-GRUPPEN**
ISOCYANATE PREPOLYMER HAVING NCO GROUPS OF DIFFERING REACTIVITY
PRÉPOLYMÈRE D'ISOCYANATE AVEC GROUPES NCO DIVERSEMENT RÉACTIFS

(30) Priorität: 28.11.2006 DE 102006056478
(43) Veröffentlichungstag der Anmeldung: 19.08.2009
(73) Patentinhaber: Henkel AG & Co. KGaA, 40589 Düsseldorf (DE)
(72) Erfinder: KREBS, Michael, 40724 Hilden (DE); LOHR, Christoph, 40822 Mettmann (DE)
(86) Internationale Anmeldenummer: PCT/EP2007/059825
(87) Internationale Veröffentlichungsnummer: WO 2008/064936

(56) Entgegenhaltungen:
- EP-A- 0 150 444
- WO-A-99/24486
- BECKER/BRAUN: "Polyurethane /Kunststoff Handbuch" 1983, GÜNTER OERTEL , HANSER VERLAG, MUNICH , XP002464735 Seite 19 - Seite 20

## Beschreibung

Die Erfindung betrifft ein Isocyanatprepolymer, das mindestens zwei NCO-Gruppen pro Molekül enthält, wobei die NCO-Gruppen unterschiedliche Reaktivität aufweisen. Weiterhin sollen diese Isocyanatprepolymere überwiegend Moleküle mit einer vorzugsweise idealen Struktur aufweisen, d. h. es sollen nur geringe Anteile an polymeren oder oligomeren Nebenprodukten vorhanden sein. Weiterhin betrifft die Erfindung ein Verfahren zum Herstellen solcher Isocyanatprepolymere mit unterschiedlich reaktiven NCO-Gruppen.

Polymere und Oligomere, die reaktive NCO-Gruppen enthalten, sind seit langem bekannt. Ebenso sind Isocyanate bekannt, die unterschiedliche Reaktivitäten der NCO-Gruppen aufweisen. Durch Umsetzung von H-aciden Komponenten, beispielsweise Polyolen oder Aminen mit Di- oder Polyisocyanaten, können niedermolekulare oder hochmolekulare Produkte synthetisiert werden, die reaktive NCO-Gruppen aufweisen. Solche Prepolymere können entweder in der Synthese weiter umgesetzt werden oder sie werden direkt in verschiedenen Anwendungen, z. B. als Klebstoffe oder als Beschichtungsmittel, eingesetzt. Bei der Umsetzung der Isocyanate ist es jedoch schwer zu vermeiden, dass entweder Polymerisationen an Isocyanat-Gruppen untereinander stattfinden, so dass hochfunktionelle NCO-Oligomere entstehen, oder dass durch Umsetzung von Polyisocyanaten mit Diolen oder höherwertigen Alkoholen verzweigte Polymere entstehen. Solche Polymer- und Oligomermischungen haben den Nachteil, dass sie im allgemeinen eine hohe Viskosität aufweisen. Weiterhin ist die Molekulargewichtsverteilung der entsprechenden Oligomere sehr breit. Durch weitere Umsetzung entstehen immer höher verzweigte Produkte, die dann für die geplanten Anwendungszwecke weniger geeignet sind. Außerdem sind die häufig enthaltenen monomere Isocyanate gesundheitlich bedenklich und sollten vermieden werden.

In der EP 0511566 werden durch Feuchtigkeit härtende NCO-reaktive Polyurethanschmelzklebstoffe beschrieben, die aus einem Polyether- oder Polyesterpolyolgemisch hergestellt werden, sowie aus einem Gemisch von Isocyanaten, die zwei unterschiedliche reaktive NCO-Gruppen aufweisen. Bei dieser Erfindung werden jeweils Gemische aus Polyolen und Polyisocyanaten umgesetzt. Als Reaktionsprodukt werden entsprechend mehrere in ihrer Zusammensetzung und Struktur nicht weiter definierte Polymere erhalten werden.

Die EP 0827995 beschreibt ein Verfahren zum Verkleben von zwei Substraten, wobei ein Schmelzklebstoff auf Urethan-Basis eingesetzt wird. Dieser enthält ein Polyisocyanatprepolymer, hergestellt als Reaktionsprodukt einer H-aktiven Komponente und eines mindestens difunktionellen Polyisocyanats, wobei das Polyisocyanatprepolymer weniger als 2 % unreagiertes Polyisocyanatmonomer enthalten soll. Über die Reaktivität der Isocyanatgruppen oder der Polyolkomponente werden keine weiteren Aussagen getroffen.

Die EP 0 150 444 beschreibt ein Verfahren zur Herstellung von Polyurethanprepolymeren mit endständigen Isocyanat-Gruppen. Dabei werden Prepolymere mit einem Diisocyanat und mit unterschiedlich reaktiven NCO-Gruppen umgesetzt und diese danach weiterhin mit einem Isocyanat mit reaktiven NCO-Gruppen äquimolar oder im Überschuss umgesetzt. Dabei beträgt der Überschuss der NCO-Gruppen in der zweiten Reaktionsstufe maximal 2 : 1. Ein Destillationsschritt zur Reduktion von monomeren Diisocyanaten wird nicht beschrieben.

Weiterhin Ist die WO 01/40342 bekannt. Es wird dort eine Polyurethanzusammensetzung beschrieben, wobei das Polyurethanprepolymer hergestellt wird durch Umsetzung in einer ersten Stufe eines Diols mit einem Überschuss eines monomeren Diisocyanats, wobei das entstehende hochmolekulare Diisocyanat ausgefällt und von nicht umgesetztem monomerem Diisocyanat befreit wird und in einem zweiten Schritt das hochmolekulare Zwischenprodukt mit einem Polyol umgesetzt wird, so dass ein reaktives Prepolymer mit Isocyanatendgruppen entsteht. Die Reaktionsführung der ersten Stufe wird mit einem Überschuss an Isocyanat geführt, dass dort ein wenig verzweigtes Polymer entsteht. Es werden keine weiteren Maßnahmen beschrieben, um unkontrollierte Polymerisierung der Reaktionsprodukte zu vermelden.

Weiterhin ist die WO 99/24486 bekannt. Es wird dort ein Zweistufenprozess zur Herstellung eines Polyurethan-Bindemittels beschrieben, das einen niedrigen Gehalt an leichtflüchtigen Isocyanatgruppen tragenden Monomeren aufweist. Dabei wird in einer ersten Stufe ein Polyol mit einem Diisocyanat umgesetzt, das unterschiedlich reaktive NCO-Gruppen aufweist. Weiterhin wird in einer zweiten Stufe dieses entstehende NCO- und OH-Gruppen aufweisende Produkt mit einem mindestens difunktionellen Diisocyanat umgesetzt. Es wird aber nur ein geringer Überschuss an Isocyanat in der zweiten Stufe eingesetzt, so dass durch die bekannten NCO-Nebenreaktionen polymere und oligomere Produkte entstehen. Ein Destillationsschritt wird bei dieser Erfindung nicht gefordert.

Ausgehend von diesem Stand der Technik stellt sich die Aufgabe, ein Isocyanathaltiges Polyurethanprepolymer herzustellen, dass nur geringe Anteile von Nebenprodukten enthalten soll. Weiterhin soll dieses Prepolymer zwei Isocyanatgruppen unterschiedlicher Reaktivität aufweisen. Außerdem soll das entstehende Prepolymer nur einen geringen Gehalt an monomeren Di- oder Triisocyanaten enthalten.

Die Erfindung wird durch ein Verfahren gemäß Anspruch 1 gelöst. Dabei wird eine Polyolkomponente mit mindestens zwei OH-Gruppen in einer ersten Stufe mit einem Diisocyanat A umgesetzt, das zwei unterschiedlich reaktive NCO-Gruppen aufweist. Die in dem Reaktionsprodukt vorhandenen OH-Gruppen werden in einer zweiten Stufe mit einem weiteren reaktiveren Di- oder Triisocyanat B umgesetzt, wobei das Isocyanat in großem Überschuss vorliegt. Nach Ende der Umsetzung werden die nicht abreagieren überschüssigen Di- oder Triisocyanate B abdestilliert. Es wird ein im wesentlichen ideales Polymer erhalten, das endständig NCO-Gruppen aufweist, wobei mindestens eine NCO-Gruppe niedriger Reaktivität und mindestens eine NCO-Gruppe höherer Reaktivität am Polymermolekül vorhanden sind.

Eine bevorzugte Ausführungsform der Erfindung setzt Polyole ein, die zwei, drei oder vier OH-Gruppen aufweisen. Von diesen OH-Gruppen soll mindestens eine OH-Gruppe mit einem Diisocyanat A reagiert haben, so dass eine freie NCO-Gruppe niederer Reaktivität vorliegt. Mindestens eine OH-Gruppe des Polyols soll mit einem Isocyanat B reagiert haben, so dass danach eine freie Isocyanatgruppe mit höherer Reaktivität vorliegt. Die ggf. ursprünglich vorhandenen weiteren OH-Gruppen können entweder mit Isocyanaten höherer Reaktivität oder niederer Reaktivität umgesetzt sein. Insbesondere sollen Isocyanatprepolymere der Formeln I - V enthalten werden.

I. NCO_{B}- Polyol - NCO_{A}

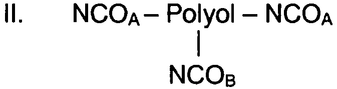

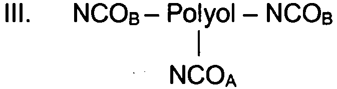

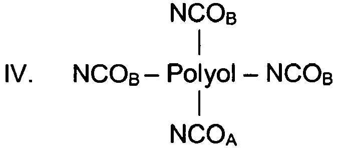

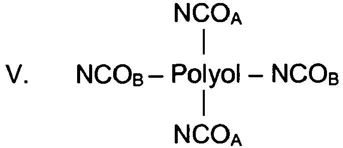

Die erfindungsgemäßen Isocyanatprepolymere mit Isocyanatgruppen unterschiedlicher Reaktivität können nach an sich bekannten einzelnen Verfahren durch Umsetzung von Polyolen mit Di- und/oder Triisocyanaten hergestellt werden. Dabei ist es notwendig, dass die Reaktion in zwei Reaktionsschritten durchgeführt wird, d. h. es wird zuerst eine Isocyanatgruppe niederer Reaktivität an den Polyol anreagiert und in einem zweiten Reaktionsschritt eine Isocyanatgruppe höherer Reaktivität. Durch die Auswahl der abgestuften Reaktivitäten der monomeren Isocyanate wird die Reaktion gesteuert und es kann die Bildung von unerwünschten hochmolekularen oder verzweigten Nebenprodukten vermindert werden.

Im Rahmen der Erfindung können eine Vielzahl von mehrfunktionellen Alkoholen eingesetzt werden. Diese sollen 2 bis 10, insbesondere von 2 bis 4 OH-Gruppen, pro Molekül aufweisen. Es kann sich dabei um niedermolekulare Verbindungen handeln oder um Polymere. Es ist jedoch notwendig, dass diese Verbindungen keine weiteren mit NCO-Gruppen reaktiven funktionellen Gruppen aufweisen. Bei den Verbindungen mit mehreren OH-Gruppen kann es sich um solche handeln, die endständige OH-Gruppen tragen oder es können Verbindungen sein, die über die Kette verteilt seitenständig OH-Gruppen aufweisen. Bei den OH-Gruppen handelt es sich um solche, die mit Isocyanaten reagieren können. Es kann sich um primäre, sekundäre oder tertiäre OH-Gruppen handeln, bevorzugt sind jedoch primäre oder sekundäre OH-Gruppen. Beispiele für geeignete Verbindungen sind Polyole auf Basis von Polyethern, Polyestern oder Polyalkylenen.

Geeignet sind beispielsweise aliphatische oder araliphatische Alkohole 2 - 10, insbesondere 2 - 4 OH-Gruppen pro Molekül. Es können bevorzugt primäre und sekundäre Alkohole eingesetzt werden. Es können trifunktionelle Alkohole wie Glycerin, Trimethylolethan und/oder Trimethylolpropan, oder höher funktioneller Alkohole, wie beispielsweise Pentaerythrit oder Zuckeralkohole, eingesetzt werden. Es können auch Hydroxy-alkylsubstituierte Phenole eingesetzt werden oder cycloaliphatische Diole oder Polyole. Insbesondere werden jedoch lineare Alkohole mit 2 bis 30 C-Atomen eingesetzt, die zwei bis zu vier OH-Gruppen aufweisen. - -

Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 1,10-Decandiol, 1,12-Dodecandiol, Dimerfettalkohol und deren höhere Homologen oder Isomeren, wie sie sich für den Fachmann aus einer schrittweisen Verlängerung der Kohlenwasserstoffkette um jeweils eine CH2-Gruppe oder unter Einführung von Verzweigungen in die Kohlenstoffkette ergeben. Ebenfalls geeignet sind höherfunktionelle Alkohole wie beispielsweise Glycerin, Trimethylolpropan, Pentaerythrit oder ihre Homologe.
Geeignete aliphatische Alkohole besitzen ein Molekulargewicht von 60 bis 600, insbesondere bis ungefähr 400.
Ebenfalls geeignet als Polyolkomponente sind Umsetzungsprodukte niedermolekularer polyfunktioneller Alkohole mit Alkylenoxiden, sogenannte Polyether. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid, Butylenoxid oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole mit den genannten Alkylenoxiden zu Polyetherpolyolen geeignet. So können, je nach gewünschtem Molekulargewicht, Anlagerungsprodukte von nur wenigen Mol Ethylenoxid und/oder Propylenoxid pro Mol oder aber von mehr als hundert Mol Ethylenoxid und/oder Propylenoxid an niedermolekulare mehrfunktionelle Alkohole eingesetzt werden. Weitere Polyetherpolyole sind durch Kondensation von z.B. Glycerin oder Pentaerythrit unter Wasserabspaltung herstellbar. Weitere, im Rahmen der Erfindung geeignete Polyole entstehen durch Polymerisation von Tetrahydrofuran (Poly-THF).
Die Polyetherpolyole werden in dem Fachmann bekannter Weise hergestellt und sind kommerziell erhältlich.

Insbesondere geeignet sind beispielsweise Polyetherpolyole mit einem Molekulargewicht von 100 - 10 000 g/mol, vorzugsweise 400 - 5 000 g/mol (zahlenmittleres Molekulargewicht, gemessen über GPC) und insbesondere Polypropylenglykol oder Polyethylenglykol mit 2 bis 4 OH-Gruppen. Es können statistische und/oder Blockcopolymere eingesetzt werden.

Unter den genannten Polyetherpolyolen sind die Umsetzungsprodukte von niedermolekularen Alkoholen mit Propylenoxid unter Bedingungen, bei denen teilweise sekundäre Hydroxylgruppen entstehen, besonders geeignet.

Weiterhin sind Polyesterpolyole geeignet. Derartige Polyesterpolyole umfassen bevorzugt die Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Zur Herstellung derartiger Polyesterpolyole geeignet sind insbesondere Hexandiol, 1,4-Hydroxymethylcyclohexan, 2-Methyl-1,3-propandiol, Butantriol-1,2,4, Triethylenglykol, Tetraethylenglykol, Ethylenglykol, Polyethylenglykol, Dipropylenglykol, Polypropylenglykol, Dibutylenglykol und Polybutylenglykol.
Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Als Tricarbonsäuren sind bevorzugt Zitronensäure oder Trimellithsäure geeignet. Die genannten Säuren können einzeln oder als Gemische aus zwei oder mehr davon eingesetzt werden. Dem Fachmann sind solche OH-funktionelle Polyester bekannt und sie sind kommerziell erhältlich. Insbesondere geeignet sind zwei oder drei endständige OH-Gruppen enthaltene Polyesterpolyole.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Polyesterpolyole weisen bevorzugt ein Molekulargewicht von ca. 200 bis 5 000 g/mol auf, insbesondere unter 3000 g/mol.

Eine weitere geeignete Gruppe von Polyalkoholen sind Polyurethanpolyole. Es handelt sich dabei um Umsetzungsprodukte von Polyisocyanaten, bevorzugt Diisocyanaten, mit Polyolen, insbesondere Diolen. Dabei können die Polyole aus der oben erwähnten Gruppe von Polyolen ausgewählte werden. Die Mengen werden so gewählt, dass endständig OH-terminierte Produkte erhalten werden. Die Funktionalität der PU-Polyole soll bevorzugt zwischen 2 und 4 betragen. Das Molekulargewicht soll zwischen 400 bis zu 5000 g/mol betragen. Solche OHterminieren PU-Polyole sind dem Fachmann bekannt.

Weitere geeignete Polyole sind -Polycarbonat-Polyole und Dimerdiole, sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden. Ebenfalls als Polyolkomponente geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyclischer Acetale erhalten werden.Weiterhin als Polyole geeignet sind Polycarbonate. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden. Eine weitere Gruppe der erfindungsgemäß einzusetzenden Polyole sind die Polyester auf der Basis von ε-Caprolacton. Solche Polyole sollen im Molekül mindestens 2 OH-Gruppen aufweisen, ggf. auch mehr.

Erfindungsgemäß müssen die Polyole mindestens 2 OH-Gruppen pro Molekül aufweisen. Bevorzugt ist es, wenn die OH-Gruppen unterschiedliche Reaktivitäten besitzen. Besonders bevorzugt ist die Verwendung von Diolen oder Triolen, die eine höher reaktive OH-Gruppe aufweisen und eine oder zwei weniger reaktive OH-Gruppen. Beispielsweise zeigen primäre, sekundäre oder tertiäre OH-Gruppen eine unterschiedliche Reaktivität. Das kann auch durch benachbarte Substituenten, wie elektrophile Gruppen oder andere sterisch abschirmende SubSubstituenten unterstützt werden. Insbesondere ist es möglich, Alkohole auszuwählen, die eine primäre OH-Gruppe und sekundäre OH-Gruppe aufweisen. Das Verhältnis der Reaktivität soll bevorzugt mindestens 1:3 betragen, insbesondere mindestens 1:5, insbesondere mindestens 1:10. Die Reaktivität kann beispielsweise als relative Größe in aprotischen Lösungsmitteln bestimmt werden. Solche Untersuchungen sind beispielsweise im Saunders, Frisch, Polyurethanes Chemistry and Technology, S.129 - 162 beschrieben.

Unter geeigneten monomeren Isocyanaten für die vorliegende Erfindung werden solche mit zwei oder mit drei NCO-Gruppen im Molekül verstanden. Es kann sich auch um niedermolekulare Umsetzungsprodukte aus Diisocyanaten mit niedermolekularen aliphatischen Diolen mit einer Molmasse von ca. 30 bis 300 g/mol handeln. Es handelt sich dabei bevorzugt um die bekannten aliphatischen, cycloaliphatischen oder aromatischen monomeren Isocyanate.

Geeignete Isocyanate sind ausgewählt aus der Gruppe 1,5-Naphthylendiisocyanat, 4,4'-Diphenylmethandiisocyanat (MDI), hydriertes oder teihydriertes MDI (H12MDI, H6MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocya-nato-2,4,4-trimethylhexan, 1-Isocyanatomethyl-3-isocyanato-1,5,5-trimethylcyclo-hexan (IPDI), chlorierte und bromierte Diisocyanate, phosphorhaltige Diisocyanate, Tetramethoxybutan-1,4-diisocyanat, Naphthalin-1,5-diisocyanat (NDI), Butan-1,4-diisocyanat, Hexan-1,6-diisocyanat (HDI), Dicyclohexylmethandiisocyanat, Tetramethylen-, Hexamethylen-, Undecan-, Dodecamethylen-, 2,2,4-Trimethyl-hexan-2,3,3-Trimethyl-hexamethylendiiso-cyanat, Cyclohexan-1,4-diisocyanat, Ethylendiisocyanat, Methylentriphenyltriisocyanat (MIT), Phthalsäure-bis-isocyanatoethylester, Diisocyanate mit reaktionsfähigen Halogenatomen, wie 1-Chlormethylphenyl-2,4-diisocyanat, 1-Brommethyl-phenyl-2,6-diisocyanat,3,3-Bischlormethylether-4,4'-diphenyldiisocyanat. Weitere einsetzbare Diisocyanate sind Trimethylhexamethylendiisocyanat, 1,4-Diisocyanatobutan, 1,12-Diisocyanatododecan und Dimerfettsäurediisocyanat, Lysinesterdiisocyanat, 4,4-Dicyclohexylmethandiisocyanat, 1,3-Cyclohexan- oder 1,4-Cyclohexandiisocyanat.

Als trifunktionelle Isocyanate geeignet sind solche Isocyanate, die durch Trimerisation oder Oligomerisation von Diisocyanaten oder durch Reaktion von Diisocyanaten mit trifunktionellen hydroxylgruppenhaltigen Verbindungen entstehen. Beispiele dafür sind Trimerisierungsprodukte der Isocyanate HDI, MDI oder IPDI oder Addukte aus Diisocyanaten und niedermolekularen Triolen, wie Trimethylolpropan oder Glycerin.

Geeignete Diisocyanate mit zwei NCO-Gruppen unterschiedlicher Reaktivität werden aus der Gruppe der aromatischen, aliphatischen oder cycloaliphatischen Diisocyanate ausgewählt. Beispiele für besonders geeignete aromatische Diisocyanate mit unterschiedlich reaktiven NCO-Gruppen sind die Isomeren des Toluylendiisocyanats (TDI), Naphthalin-1,5-diisocyanat (NDI),Naphthali-1,4-diisocyanat, 1,3-Phenylendiisocyanat oder 2,4 MDI. Beispiele für aliphatische Diisocyanate mit unterschiedlich reaktiven NCO-Gruppen sind 1,6-Diisocyanato-2,2,4-trimethylhexan, 1,6-Diisocyanato-2,4,4-trimethylhexan und Lysindiisocyanat. Beispiele für geeignete cycloaliphatische Diisocyanate mit unterschiedlich reaktiven NCO-Gruppen sind z.B. 1-Isocyanatomethyl-3-isocyanato-1,5,5-trimethyl-cyclohexan (Isophorondiisocyanat, IPDI), 1-Methyl-2,4-diisocyanatocyclohexan oder 1,4 Diisocyanato-2,2,6-trimethylcyclohexan (TMCDI).

In der ersten Stufe des erfindungsgemäßen Verfahrens werden monomere Diisocyanate A mit einer OH-Gruppen eines Diols zur Reaktion gebracht. Dabei soll die Temperatur zwischen 20°C bis 180°C liegen, bevorzugt zwischen 25°C bis 130°C, insbesondere zwischen 40°C bis 80°C. Dabei kann die Umsetzung ohne Katalysator durchgeführt werden, ggf. ist es möglich, geringe Anteile an Katalysatoren der Mischung zuzusetzen. Ggf. ist es jedoch zweckmäßig, eine starke Temperaturerhöhung zu vermeiden, um Nebenreaktionen zu vermindern.

Erfindungsgemäß geeignet sind Diisocyanate A, die NCO-Gruppen mit unterschiedlicher Reaktivität aufweisen, wobei der Reaktivitätsunterschied mindestens 1:2, bevorzugt 1:3 beträgt. Die relative Reaktivität der Isocyanatgruppen kann durch Experiment bestimmt werden, insbesondere sind solche Methoden in Saunders, Frisch, Polyurethanes Chemistry and Technology, J. Wiley 1962, S. 129- 162, zusammengefasst.

Weiterhin ist es möglich, wie oben bereits aufgeführt, die Selektivität der Reaktion durch die Verwendung von Alkoholen zu erhöhen, die unterschiedlich reaktive OH-Gruppen tragen.

Ggf. ist es möglich, die Reaktion in aprotischen Lösemitteln durchzuführen. Dabei wird die Viskosität der Reaktionsmischung abgesenkt und die Reaktion begünstigt. Die Lösemittel sollen einen Siedepunkt aufweisen, dass sie aus der Reaktionsmischung durch Destillation entfernt werden können, insbesondere unter 100 °C bei dem gewählten verminderten Druck bei einer Destillation. Bevorzugt ist jedoch, dass die Reaktion der ersten Stufe ohne Lösemittel durchgeführt wird.

Das entstehende Zwischenprodukt weist OH-Gruppen auf und freie Isocyanatgruppen. Die Menge von monomeren, nicht umgesetzten Diisocyanaten ist nur gering, sie soll im allgemeinen unterhalb von 1 Gew.-% betragen. Die Anzahl der NCO-Gruppen an der Polyolkomponente beträgt mindestens eine, es können- aber auch mehrere NCO-Gruppen an dem Polyol vorhanden sein. Erfindungsgemäß ist es jedoch notwendig, dass mindestens eine OH-Gruppe pro Molekül in der ersten Stufe nicht reagiert. Bevorzugt werden Umsetzungsprodukte erhalten auf Basis von Diolen, Triolen oder Tetraalkoholen, bei denen eine oder zwei oder drei OH-Gruppen mit der reaktiven Gruppe eines Diisocyanats A mit unterschiedlich reaktiven NCO-Gruppen reagiert haben. In diesem Fall können noch bis zu 3 weitere OH-Gruppen im Molekül vorhanden sein, insbesondere mindestens eine OH-Gruppe pro Molekül.

Die Menge der Diisocyanate A wird so gewählt, dass im Durchschnitt mindestens ein Diisocyanat mit einem Polyol-Molekül reagiert. Zusätzlich kann im Fall von Polyolen mit mehr als zwei OH-Gruppen die Menge des Diisocyanats A so gewählt werden, dass weitere OH-Gruppen zusätzlich umgesetzt werden. Es ist bekannt, dass ggf. ein geringer Überschuss an Diisocyanat eingesetzt werden kann, um ein möglichst ideales Zwischenprodukt zu erhalten. Das Verhältnis der Äquivalente OH (x) zu der molaren Menge Diisocyanate A (y) (val OH : mol Isocyanat= x:y) ist kleiner 1; wobei X ganzzahlig ist zwischen 2 bis 10, bevorzugt 2 bis 4, insbesondere 2, y liegt zwischen x-1 bis 1. In einer Ausführungsform können ganzzahlige Werte y eingesetzt werden. Das Verhältnis kann beispielsweise 2:1, 3:1, 3:2, 4:2 betragen.

Werden Polyole mit unterschiedlich reaktiven OH-Gruppen eingesetzt, wird die Menge der Diisocyanate bevorzugt so gewählt, dass alle OH-Gruppen der reaktiveren Art umgesetzt werden.

Durch-die Kombination von Diisocyanaten mit unterschiedlich reaktiven NCO-Gruppen und Polyolen mit unterschiedlichen OH-Gruppen kann eine hohe Selektivität erzielt werden. Die Bildung von Nebenprodukten, insbesondere von Isocyanaten, die an beiden NCO-Gruppen abreagiert haben oder von Reaktionsprodukten, die nur NCO-Gruppen ohne weitere OH-Gruppe tragen, wird verringert. Unter idealer Reaktion ist in diesem Falle zu verstehen, dass die reaktivere NCO-Gruppe des Diisocyanats sich mit einer Alkoholfunktion umsetzt. Die zweite Isocyanatgruppe soll nicht reagieren. Als Nebenprodukte können beispielsweise vollständig mit einem Isocyanat umgesetzte Alkohole, vollständig mit OH-Gruppen umgesetzte Isocyanate oder verzweigte Produkte durch Dimerisierungsreaktion von NCO-Gruppen entstehen. Die entsprechende Menge der Nebenprodukte kann beispielsweise über chromatographische Verfahren bestimmt werden. Der Anteil an polymeren Nebenprodukten ins gering, sie sollen weniger als 10 % betragen.

Für die Reaktion der zweiten Stufe werden Di- oder Triisocyanate B ausgewählt, die mindestens eine NCO-Gruppe aufweisen, die eine höhere Reaktivität besitzt als die bereits am Zwischenprodukt vorhandenen NCO-Gruppen. Es kann sich beispielsweise um die oben angeführten Isocyanate handeln, insbesondere auch um solche mit unterschiedlich reaktiven NCO-Gruppen. Bevorzugt werden aromatische Diisocyanate eingesetzt, insbesondere TDI oder MDI und seine Derivate.

Für die zweite Reaktionsstufe wird das NCO-/OH-Verhältnis von Zwischenprodukt und Di-/Triisocyanat B so gewählt, dass ein molarer Überschuss Isocyanat in Bezug auf die Anzahl der OH-Gruppen von größer als 3:1 vorliegt, insbesondere mindestens 7:1, besonders bevorzugt mindestens 10:1. Es bilden sich dann im wesentlichen Prepolymere mit geringen polymeren Verunreinigungen, die beispielsweise durch eine Kettenverlängerung entstehen. Die Verunreinigungen sollen weniger als 10 Gew.-% betragen, insbesondere weniger als 5 %, bevorzugt weniger als 3 %.

Die Reaktion wird unter den oben angegebenen Temperaturbedingungen durchgeführt. Sie kann ggf. durch erhöhte Temperatur unterstützt werden. Es soll dabei ein im wesentlichen ideales Polymer entstehen, das endständig nur Isocyanatgruppen und keine OH-Gruppen mehr aufweist. Die Anzahl der reaktiven NCO-Gruppen pro Molekül kann bevorzugt 1 betragen. Es sind jedoch aber auch zwei oder drei reaktive NCO-Gruppen pro Molekül möglich. Weiterhin ist es erfindungsgemäß, dass eine weniger reaktive NCO-Gruppe im Molekül vorhanden ist. Es ist jedoch auch möglich, dass zwei oder drei weniger reaktive NCO-Gruppen vorhanden sind.

Nach dem Abschluss der Reaktion liegt das Reaktionsprodukt als Prepolymeres mit endständigen NCO-Gruppen vor, das aber noch Anteile an überschüssigen monomeren Isocyanaten der zweiten Reaktionsstufe enthält. Ggf. können auch noch Lösemittel enthalten sein. Das vorliegende Gemisch wird dann im allgemeinen durch Destillation im Hochvakuum, bevorzugt in einem Dünnschichtverdampfer, beispielsweise bei einer Temperatur von 100 bis 200°C, vorzugsweise von 120 bis 180°C, von flüchtigen Bestandteilen, wie überschüssigen monomeren Isocyanaten und gegebenenfalls vorhandenen Lösemitteln, befreit. Es werden alle flüchtigen Bestandteile abdestilliert, auch noch ggf. vorhandene Reste der monomere Diisocyanate der ersten Reaktionsstufe. Da die Bestandteile in einer bevorzugten Ausführungsform unterschiedliche Siedepunkte aufweisen z.B. aliphatische und aromatische Isocyanate und ggf. Lösemittel, Ist es durch Wahl der Destillationsbedingungen möglich, die abdestillierten Bestandteile möglichst rein zu erhalten.

Das erhaltene reaktive PU-Prepolymer enthält maximal 3 Gew.-%, vorzugsweise maximal 0,3 Gew.-% und insbesondere maximal 0,03 Gew.-% monomeren Diisocyanat A und B, bezogen auf das reaktive Prepolymer. Der Gewichtsanteil des monomeren Diisocyanates kann gaschromatographisch oder mittels Hochdruckflüssigkeitschromatographie (HPLC) bestimmt werden.

Die erfindungsgemäßen Prepolymere sind nach dem oben beschriebenen Verfahren erhältlich ; diese sind weitgehend homogen und zeigen eine einheitliche Reaktivität der innerhalb der beiden unterschiedlichen NCO-Gruppen. Nebenreaktionen durch niedermolekulare Isocyanate werden vermieden. Diese Prepolymere weisen eine überwiegend ideale Struktur auf, polymere Nebenprodukte sind vermindert.

Die Viskosität der erfindungsgemäßen reaktiven Polyurethanprepolymere, gemessen nach Brookfield (ISO 2555), beträgt bei 100 °C 20 mPas bis 10000 mPas, bevorzugt 10 mPas bis 5000 mPas und insbesondere bevorzugt 200 mPas bis 3000 mPas.

Die erfindungsgemäßen Prepolymere können direkt in Endprodukte eingesetzt werden, ggf. in Mischungen mit anderen Hilfsstoffen, Additiven oder Polymeren. Sie werden aber auch in der chemischen Synthese als Baustein für andere höher molekulare Produkte eingesetzt. Durch die zwei unterschiedlich reaktiven Isocyanatgruppen ist es möglich, weitere Syntheseschritte zu steuern und definierte Polymere aufzubauen.

Die erfindungsgemäßen Isocyanatprepolymere weisen in der Praxis hervorragende Eigenschaft auf. Sie zeigen nur eine enge Molekulargewichtsverteilung. Weiterhin sind die Viskositätseigenschaften für die unmittelbare Anwendung oder für weitere Reaktionen besonders geeignet. Die Viskosität liegt niedriger im Vergleich zu stärker oligomerhaltigen Produkten. Durch den verminderten Anteil an monomeren Isocyanaten können solche Prepolymere auch in Produkte eingebracht werden oder chemisch umgesetzt werden, die aus lebensmittelrechtlichen Gründen nur einen geringen Anteil an monomeren Isocyanaten aufweisen dürfen. Beispiele für die Verwendung der erfindungsgemäßen Polyisocyanate sind Schmelzklebstoffe oder Kaschierklebstoffe. Sie können weiterhin in Überzugsmitteln oder Strukturklebstoffen eingesetzt werden oder es sind Anwendungen im do-it-yourself-Bereich möglich.

### Beispiel 1

400 g eines PPG-Diols mit einem Molekulargewicht von ca. 450 (0,89 mol) werden mit 198,5 g eines Diisocyanats (IPDI) (0,89 mol) gemischt und auf 40 °C erwärmt. Nach 1 Std. ist die Hälfte der Isocyanatgruppe abreagiert, der NCO-Gehalt auf 6,3 % gefallen.
Nach Abbrechen der NCO-Gruppen in einer Probe zeigt ein GPC einen Haupt-Peak von ca. 670.
Die Mischung wird mit 670 g MDI (2,7 mol) umgesetzt und reagiert bei Temperaturen bis 100 °C ab. Das entstehende Produkt wird in einem Dünnschichtverdampfer bei 0,001 mbar und ca. 190°C von nicht umgesetzten monomeren MDI befreit.
Das Produkt hat einen NCO-Gehalt von 9 % und eine Viskosität von 3300 mPas bei 80°C.

Ein GPC zeigt nach dem abreagieren der NCO-Gruppen eine Haupt-Peak von ca. 930. Es wird eine enge Molekulargewichtsverteilung mit ca. 10% hochmolekularen Verunreinigungen erhalten.

## Patentansprüche

1. Verfahren zum Herstellen von mindestens difunktionellen Isocyanatprepolymeren, die zwei unterschiedliche reaktive NCO-Gruppen aufweisen und einen Monomerengehalt an monomeren Diisocyanaten unterhalb von 3 % aufweisen, **dadurch gekennzeichnet, dass**
a) ein Polyol mit zwei bis zehn OH-Gruppen umgesetzt wird mit einem Diisocyanat A, das unterschiedlich reaktive NCO-Gruppen enthält, wobei das Verhältnis x : y aus Anzahl der Äquivalente der OH-Gruppe zu der molaren Menge des Diisocyanats (val OH : mol Isocyanat) kleiner 1 ist, wobei x ganzzahlig ist und y zwischen x-1 bis 1 liegt.
b) Umsetzen der reaktiven NCO-Gruppen, so dass ein Zwischenprodukt mit NCO- und OH-Gruppen vorliegt,
c) Umsetzen mit einem weiteren Di- oder Triisocyanat B mit höherreaktiven NCO-Gruppen,
d) Abdestillieren der nichtabreagierten monomeren Isocyanate wobei die molare Menge des weiteren Di-/Triisocyanats B im mindestens dreifachen Überschuss zu den vorhandenen OH-Gruppen vorliegt.

2. Verfahren nach Anspruch 1, **dadurch gekennzeichnet, dass** das Polyol zwei, drei oder vier OH-Gruppen aufweist, ausgewählt aus Polyetherpolyolen, Polyesterpolyolen und/oder Alkylenpolyolen.

3. Verfahren nach einem der Ansprüche 1 bis 2, **dadurch gekennzeichnet, dass** das Molekulargewicht des Polyols zwischen 60 bis 6000 beträgt.

4. Verfahren nach einem der Ansprüche 1 bis 3, **dadurch gekennzeichnet, dass** das Polyol unterschiedlich reaktive OH-Gruppen aufweist, insbesondere sekundäre und primäre OH-Gruppen.

5. Verfahren nach einem der Ansprüche 1 bis 4, **dadurch gekennzeichnet, dass** das Diisocyanat A ausgewählt ist aus IPDI, TDI, TMXDI, 2,4-MDI, NDI, insbesondere ein aliphatisches Diisocyanat.

6. Verfahren nach einem der Ansprüche 2 bis 5, **dadurch gekennzeichnet, dass** das molare Verhältnis der Diisocyanate A zu dem Polyol so gewählt wird, dass eine oder zwei oder drei OH-Gruppen mit dem Diisocyanat umgesetzt werden, wobei mindestens eine weitere OH-Gruppe in dem Polyol vorhanden ist.

7. Verfahren nach einem der Ansprüche 1 bis 6, **dadurch gekennzeichnet, dass** das Isocyanat B mit den höher reaktiven NCO-Gruppen ein aromatisches Isocyanat ist, insbesondere ein aromatisches Diisocyanat.

8. Verfahren nach einem der Ansprüche 1 bis 7, **dadurch gekennzeichnet, dass** das molare Verhältnis Di- oder Triisocyanat B zu freien OH-Gruppen größer als 3:1 beträgt, bevorzugt größer 7:1.

9. Verfahren nach einem der Ansprüche 1 bis 8, **dadurch gekennzeichnet, dass** der Gehalt an monomeren Isocyanaten nach der Destillation kleiner 0,3 % beträgt.

10. Polyfunktionelles Isocyanatprepolymer, erhältlich nach einem Verfahren gemäß Anspruch 1 bis 9 aus einem Polyol mit 2 -10 OH-Gruppen durch Reaktion in zwei Stufen mit zwei unterschiedlichen Di- oder Triisocyanaten, **dadurch gekennzeichnet, dass** mindestens eine NCO-Gruppe eine NCO-Gruppe mit niedriger Reaktivität ist und die anderen NCO-Gruppen NCO-Gruppen höherer Reaktivität sind, wobei der Gehalt an monomeren Isocyanaten unterhalb von 3 % beträgt und wobei eine ideale und einheitliche Struktur der Polymermoleküle vorliegt ausgewählt aus
I. NCO_{B} - Polyol - NCO_{A} 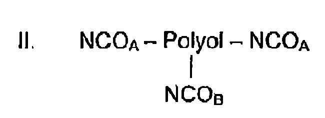 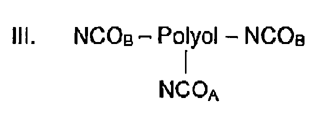 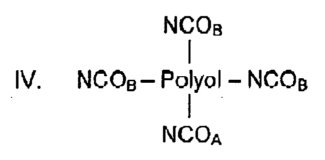 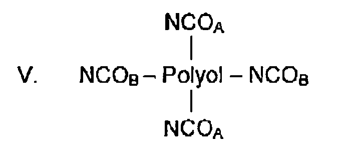 und die polymeren Verunreinigungen unter 10 Gew.-% liegen.

11. Isocyanatprepolymer nach Anspruche 10, **dadurch gekennzeichnet, dass** das Prepolymer eine höher reaktive NCO-Gruppe aufweist.

12. Isocyanatprepolymer nach einem der Ansprüche 10 bis 11, **dadurch gekennzeichnet, dass** die höher reaktive NCO-Gruppe auf Basis von 2,4 und/oder 4,4-MDI eingebracht wurde und die weniger reaktive Isocyanatgruppe durch ein aliphatisches Isocyanat eingebracht wurde.

13. Isocyanatprepolymer nach einem der Ansprüche 10 bis 12, **dadurch gekennzeichnet, dass** das Polyol zwei unterschiedlich reaktive OH-Gruppen aufweist, insbesondere mindestens eine primäre OH-Gruppe und mindestens eine sekundäre OH-Gruppe.

14. Verwendung von Isocyanatprepolymeren nach Anspruch 10 bis 13 in Polyurethanklebstoffen, Beschichtungsmitteln, Verguss- oder Knetbaren Massen und/oder Schäumen.

## Claims

1. A method for producing at least difunctional isocyanate prepolymers which comprise two different reactive NCO groups and have a monomer content of monomeric diisocyanates of below 3%, **characterised in that**
a) a polyol with two to ten OH groups is reacted with a diisocyanate A, which contains differently reactive NCO groups, wherein the ratio x:y of the number of OH group equivalents to the molar quantity of diisocyanate (gram equivalent OH:mol isocyanate) is less than 1, x being an integer and y being between x-1 and 1,
b) reacting the reactive NCO groups, such that an intermediate with NCO and OH groups is obtained,
c) performing a reaction with a further di- or triisocyanate B with more highly reactive NCO groups,
d) distilling off the monomeric isocyanates which have not been consumed by reaction
wherein the molar quantity of the further di-/triisocyanate B is present in an at least three-fold excess relative to the OH groups which are present.

2. A method according to claim 1, **characterised in that** the polyol comprises two, three or four OH groups which are selected from polyether polyols, polyester polyols and/or alkylene polyols.

3. A method according to either one of claims 1 to 2, **characterised in that** the molecular weight of the polyol amounts to between 60 and 6000.

4. A method according to any one of claims 1 to 3, **characterised in that** the polyol comprises differently reactive OH groups, in particular secondary and primary OH groups.

5. A method according to any one of claims 1 to 4, **characterised in that** the diisocyanate A is selected from IPDI, TDI, TMXDI, 2,4-MDI, NDI, in particular an aliphatic diisocyanate.

6. A method according to any one of claims 2 to 5, **characterised in that** the molar ratio of the diisocyanates A to the polyol is selected such that one or two or three OH groups are reacted with the diisocyanate, wherein at least one further OH group is present in the polyol.

7. A method according to any one of claims 1 to 6, **characterised in that** the isocyanate B with the more highly reactive NCO groups is an aromatic isocyanate, in particular an aromatic diisocyanate.

8. A method according to any one of claims 1 to 7, **characterised in that** the molar ratio of di- or triisocyanate B to free OH groups amounts to greater than 3:1, preferably greater than 7:1.

9. A method according to any one of claims 1 to 8, **characterised in that**, after distillation, the monomeric isocyanate content amounts to less than 0.3%.

10. A polyfunctional isocyanate prepolymer, obtainable by a method according to claims 1 to 9 from a polyol with 2-10 OH groups by reaction in two steps with two different di- or triisocyanates, **characterised in that** at least one NCO group is an NCO group with low reactivity and the other NCO groups are NCO groups of higher reactivity, wherein the content of monomeric isocyanates amounts to below 3% and wherein an ideal and uniform structure of the polymer molecules is obtained which is selected from
**I. NCO_{B} - Polyol - NCO_{A}** 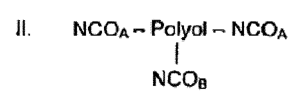 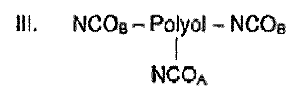 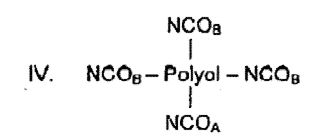 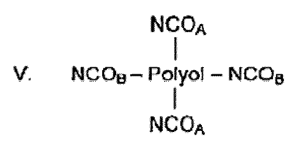 and polymeric impurities amount to less than 10 wt.%.

11. An isocyanate prepolymer according to claim 10, **characterised in that** the prepolymer comprises a more highly reactive NCO group.

12. An isocyanate prepolymer according to either one of claims 10 to 11, **characterised in that** the more highly reactive NCO group was introduced on the basis of 2,4- and/or 4,4-MDI and the less reactive isocyanate group was introduced by an aliphatic isocyanate.

13. An isocyanate prepolymer according to any one of claims 10 to 12, **characterised in that** the polyol comprises two differently reactive OH groups, in particular at least one primary OH group and at least one secondary OH group.

14. Use of isocyanate prepolymers according to claims 10 to 13 in polyurethane adhesives, coating agents, encapsulating or kneadable compositions and/or foams.

## Revendications

1. Procédé pour la préparation de prépolymères d'isocyanates au moins difonctionnels qui présentent deux groupes NCO réactifs différents et une teneur en diisocyanates monomères inférieure à 3 %, **caractérisé en ce que**
a) on fait réagir un polyol comprenant de deux à dix groupes OH avec un diisocyanate A qui contient des groupes NCO à réactivité différente, le rapport x : y du nombre des équivalents des groupes OH à la quantité molaire du diisocyanate (val OH : mol isocyanate) étant inférieur à 1, x représentant un nombre entier et y s'élevant entre x-1 et 1 ;
b) on fait réagir les groupes NCO réactifs, si bien que l'on obtient un produit intermédiaire contenant des groupes NCO et des groupes OH;
c) on fait réagir avec un autre diisocyanate ou triisocyanate B comprenant des groupes NCO à réactivité supérieure ;
d) on élimine par distillation les isocyanates monomères n'ayant pas réagi ;
la quantité molaire du di/triisocyanate B supplémentaire étant présente en un excès au moins triple par rapport aux groupes OH présents.

2. Procédé selon la revendication 1, **caractérisé en ce que** le polyol présente deux, trois ou quatre groupes OH, choisis parmi des polyétherpolyols, des polyesterpolyols et/ou des alkylènepolyols.

3. Procédé selon l'une quelconque des revendications 1 à 2, **caractérisé en ce que** le poids moléculaire du polyol se situe entre 60 et 6000.

4. Procédé selon l'une quelconque des revendications 1 à 3, **caractérisé en ce que** le polyol présente des groupes OH à réactivité différente, en particulier des groupes OH secondaires et primaires.

5. Procédé selon l'une quelconque des revendications 1 à 4, **caractérisé en ce que** le diisocyanate A est choisi parmi le IPDI, le TDI, le TMXDI, le 2,4-MDI, le NDI, en particulier représente un diisocyanate aliphatique.

6. Procédé selon l'une quelconque des revendications 2 à 5, **caractérisé en ce que** le rapport molaire des diisocyanates A au polyol est choisi de telle sorte que l'on fait réagir un ou deux ou trois groupes OH avec le diisocyanate, au moins un groupe OH supplémentaire étant présent dans le polyol.

7. Procédé selon l'une quelconque des revendications 1 à 6, **caractérisé en ce que** l'isocyanate B comprenant des groupes NCO à réactivité supérieure représente un isocyanate aromatique, en particulier un diisocyanate aromatique.

8. Procédé selon l'une quelconque des revendications 1 à 7, **caractérisé en ce que** le rapport molaire du diisocyanate ou du triisocyanate B aux groupes OH libres est supérieur à 3 : 1, de préférence supérieure à 7 : 1.

9. Procédé selon l'une quelconque des revendications 1 à 8, **caractérisé en ce que** la teneur en isocyanates monomères après la distillation est inférieure à 0,3 %.

10. Prépolymère d'isocyanate polyfonctionnel, que l'on obtient conformément à un procédé selon les revendications 1 à 9, à partir d'un polyol comprenant de 2 à 10 groupes OH, par mise en réaction en deux étapes avec deux diisocyanates ou triisocyanates différents, **caractérisé en ce qu'**au moins un groupe NCO représente un groupe NCO à réactivité inférieure et les autres groupes NCO représentent des groupes NCO à réactivité supérieure, dans lequel la teneur en isocyanates monomères est inférieure à 3 % et dans lequel est présente une structure idéale et homogène des molécules polymères, choisie parmi :
**I. NCO_{B} - Polyol - NCO_{A}** 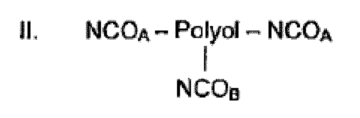 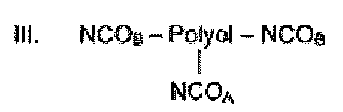 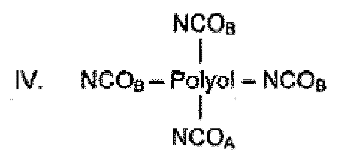 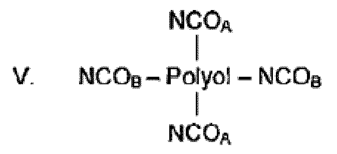 et les impuretés polymère sont inférieures à 10 % en poids.

11. Prépolymère d'isocyanate selon la revendication 10, **caractérisé en ce que** le prépolymère présente un groupe NCO à réactivité supérieure.

12. Prépolymère d'isocyanate selon l'une quelconque des revendications 10 à 11, **caractérisé en ce que** le groupe NCO à réactivité supérieure a été incorporé sur base du 2,4 et/ou du 4,4-MDI, et les groupes isocyanates à réactivité inférieure ont été incorporés via un isocyanate aliphatique.

13. Prépolymère d'isocyanate selon l'une quelconque des revendications 10 à 12, **caractérisé en ce que** le polyol présente deux groupes OH à réactivité différente, en particulier au moins un groupe OH primaire et au moins un groupe OH secondaire.

14. Utilisation de prépolymères d'isocyanates selon les revendications 10 à 13 dans des adhésifs à base de polyuréthane, des agents d'enduction, des matières aptes à être coulées ou malaxées et/ou des mousses.
